**Europäisches Patentamt**

**European Patent Office**

**Office européen des brevets**

(11) Numéro de publication: **0 233 113**
**B1**

(12)                                  **FASCICULE DE BREVET EUROPEEN**

(45) Date de publication du fascicule du brevet:
05.07.89

(51) Int. Cl.⁴: **B29C 45/40**

(21) Numéro de dépôt: 87400174.6

(22) Date de dépôt: 26.01.87

(54) Dispositif d'éjection et de rappel d'éjection d'une pièce dans une machine.

(30) Priorité: 30.01.86 FR 8601299

(43) Date de publication de la demande:
19.08.87 Bulletin 87/34

(45) Mention de la délivrance du brevet:
05.07.89 Bulletin 89/27

(84) Etats contractants désignés:
AT BE CH DE ES GB IT LI

(56) Documents cités:
DE-A- 3 309 707
FR-A- 1 568 601
FR-A- 2 355 592
US-A- 3 252 180
US-A- 3 448 488

(73) Titulaire: **AEROSPATIALE SOCIETE NATIONALE INDUSTRIELLE, 37, Boulevard de Montmorency, F-75781 Paris Cédex 16(FR)**

(72) Inventeur: **Mingot, Jacky, 6, Allée des Ecureuils, F-33160 Saint Médard en Jalles(FR)**

(74) Mandataire: **Mongrédien, André et al, c/o BREVATOME 25, rue de Ponthieu, F-75008 Paris(FR)**

**Description**

La présente invention a pour objet un dispositif d'éjection d'une pièce selon le preambule de la revendication utilisable notamment, mais non exclusivement, dans des machines de moulage ou de mise en forme, telles que des extrudeuses ou des presses à mouler par exemple.

L'éjection de la pièce terminée dans les machines de moulage se fait généralement de la manière suivante : la pièce à réaliser est moulée entre une première demi-coquille, fixe par rapport au bâti de la machine, et une deuxième demi-coquille montée à la partie supérieure d'un ensemble mobile par rapport au bâti. Sur cet ensemble mobile est monté un ensemble d'éjection qui peut se déplacer par rapport à ce dernier et comporte une ou plusieurs tiges d'éjection dont la partie supérieure traverse la deuxième demi-coquille et est en contact avec la partie inférieure de la pièce moulée. Lorsque celle-ci est terminée, on fait descendre l'ensemble mobile jusqu'à ce que l'ensemble d'éjection vienne en butée sur un ou plusieurs éjecteurs fixes par rapport au bâti de la machine. Dans un premier type de machine, il y a un seul éjecteur placé suivant l'axe de la machine (en effet, celle-ci présente généralement une symétrie de révolution) alors que, dans un deuxième type de machine, il y a plusieurs éjecteurs régulièrement répartis autour de cet axe. L'ensemble mobile continuant sa course vers le bas, ceci a pour effet que la partie supérieure des tiges d'éjection se dégage de l'ensemble mobile et de la deuxième demi-coquille, ce qui permet l'éjection de la pièce. On fait ensuite remonter l'ensemble mobile, lequel entraîne à nouveau l'ensemble d'éjection au cours de ce mouvement.

Cependant, il faut prévoir un rappel d'éjection car l'ensemble d'éjection ne revient pas automatiquement par gravité à sa position initiale par rapport à l'ensemble mobile à cause des frottements ou d'éventuels désalignements. Plusieurs dispositifs ont été proposés pour effectuer ce rappel. Par exemple, on a utilisé des vérins montés sur l'ensemble mobile et agissant sur l'ensemble d'éjection : un tel dispositif est complexe, donc coûteux, et, de plus, alourdit considérablement la machine.

Pour éviter ces inconvénients, on a utilisé des accoupleurs automatiques, disponibles dans le commerce, dont un élément est monté sur l'ensemble d'éjection et l'autre sur l'éjecteur. Le document FR-A-2 355 592 décrit un accoupleur de ce type. On obtient ainsi un verrouillage de l'ensemble d'éjection sur les èjecteurs et, au cours de la remontée de l'ensemble mobile, le déverrouillage n'est réalisé que lorsque l'ensemble mobile et l'ensemble d'éjection ont retrouvé leur position normale l'un part rapport à l'autre.

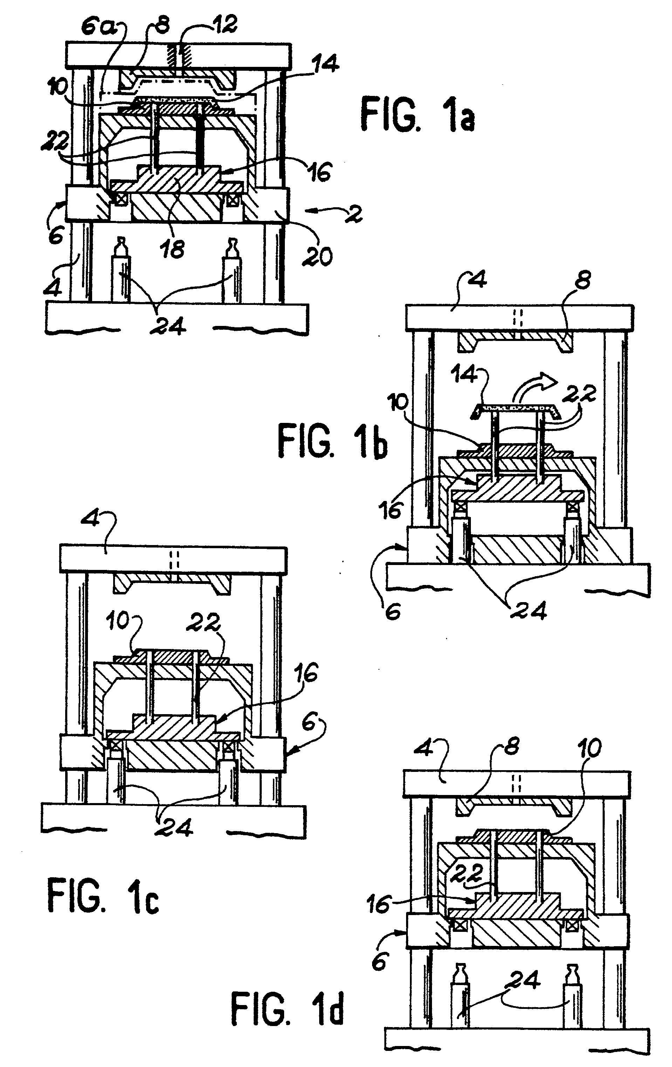

De tels dispositifs ont été montés, avec succés, sur des machines du premier type ci-dessus (un seul éjecteur). On a pensé utiliser les mêmes dispositifs sur des machines du deuxième type (plusieurs éjecteurs). Le déroulement d'une opération d'éjection dans le cas d'une machine du deuxième type qui serait équipée d'accoupleurs automatiques est illustré aux figures 1a à 1d ci-jointes qui sont des vues en coupe d'une telle machine.

On voit sur la figure 1a que la machine de moulage, portant la référence générale 2, se compose d'un bâti 4 le long duquel un ensemble mobile 6 peut se déplacer verticalement. Le moule proprement dit se compose de deux demi-coquilles, à savoir une première demi-coquille 8, fixée à la partie supérieure du bâti de la machine, et une deuxième demi-coquille 10 fixée à la partie supérieure de l'ensemble mobile 6. Lorsque ce dernier est à sa position haute 6a représentée schématiquement en traits mixtes sur la figure, une matière plastique thermodurcissable ou thermoplastique est transférée ou injectée par la conduite 12 et la pièce 14 se forme entre les demi-coquilles 8 et 10. Lorsque la pièce 14 est solidifiée, il est nécessaire de l'extraire du moule. Pour cela, on utilise un ensemble d'éjection, portant la référence générale 16, qui se compose d'un socle 18 reposant sur le socle 20 de l'ensemble mobile et de deux, ou plus, tiges d'éjection 22. Ces dernières traversent la partie supérieure de l'ensemble mobile 6, ainsi que la demi-coquille 10 du moule, la partie supérieure des tiges 22 étant en contact avec la pièce 14.

L'extraction de la pièce 14 se fait de la manière suivante :

Une fois que la pièce 14 est solidifiée, l'ensemble mobile 6 est mis en mouvement vers le bas jusqu'à ce que l'ensemble d'éjection vienne en butée contre deux, ou plus, éjecteurs 24 fixés sur le bâti de la machine, dans la partie basse de celui-ci. Ceci a pour effet de bloquer le mouvement de l'ensemble d'éjection alors que l'ensemble mobile 6 continue à descendre. On arrive ainsi à la situation de la figure 1b, dans laquelle l'ensemble mobile 6 est arrivé en fin de course, en position basse, tandis que l'ensemble d'éjection 16 se trouve en butée contre les éjecteurs 24. Les tiges 22 sortent à l'extérieur de la demi-coquille 10 et la pièce 14 peut être extraite facilement. L'ensemble mobile 6 est ensuite mis en mouvement vers le haut, jusqu'à ce qu'il vienne à nouveau en butée contre la partie inférieure de l'ensemble d'éjection 16. Ce dernier étant verrouillé sur les éjecteurs 24, il est resté immobile par rapport au bâti de la machine au cours de ce mouvement. On arrive ainsi à la situation illustrée à la figure 1c, où les tiges 22 sont revenues à nouveau entièrement à l'intérieur de la demi-coquille 10. L'ensemble mobile 6, continuant son mouvement, provoque le déverrouillage de l'ensemble d'éjection 16 qui est entraîné jusqu'à la position haute, comme cela est illustré à la figure 1d, et on peut commencer une nouvelle opération de moulage.

Si les dispositifs de ce type donnent satisfaction dans le cas des machines à un seul éjecteur, ils présentent des inconvénients très importants dans le cas des machines à plusieurs éjecteurs. En effet, afin que l'accouplement puisse se réaliser, il est nécessaire d'avoir un entraxe précis des éléments situés sur l'ensemble d'éjection, lequel doit correspondre exactement à l'entraxe des éléments placés aux extrémités des accoupleurs. Comme les éjecteurs sont placés à l'origine sur le bâti de la machine, le montage ultérieur des éléments correspondants sur l'ensemble d'éjection est une opération très délicate et il est très difficile, voire impossible, d'obtenir un alignement parfait entre les éjecteurs et les éléments placés sur l'ensemble d'éjection.

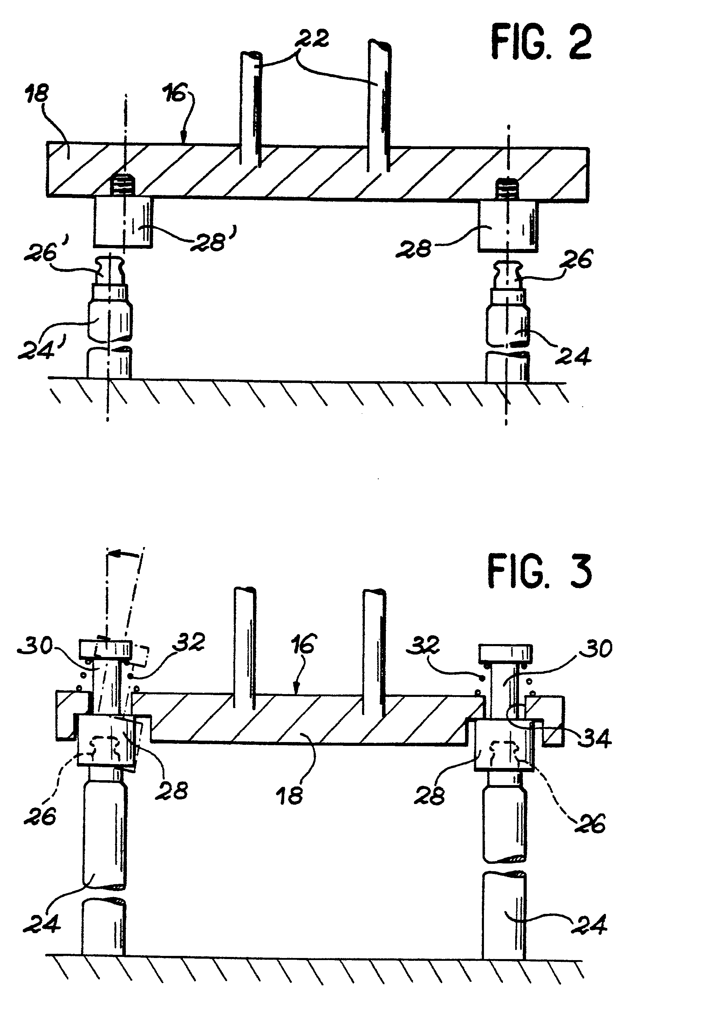

Cet inconvénient est illustré sur la figure 2 qui est une vue schématique agrandie, en coupe verticale, illustrant les moyens d'accouplement entre les éjecteurs et l'ensemble d'éjection. On voit sur cette figure que les dispositifs d'accouplement comportent, par exemple, une partie mâle 26 fixée à la partie supérieure de l'éjecteur 24 et une partie femelle 28 fixée sur le socle 18 de l'ensemble d'éjection 16. Pour les raisons évoquées ci-dessus, il arrive très souvent qu'il y ait un défaut d'alignement entre les éjecteurs 24 et les pièces mâles 26 d'une part et les pièces femelles 28 d'autre part. C'est ainsi que, dans le cas de la figure 2, si l'éjecteur 24 et la pièce femelle 28 situés à droite de la figure sont bien alignés, les axes de l'éjecteur 24' et de la pièce mâle 26' portée par celui-ci ne sont pas alignés avec l'axe de la pièce femelle 28'. Ceci rend l'accouplement très délicate, sinon impossible, et présente encore un autre inconvénient dans le cas où l'on réussit, malgré tout, à réaliser l'accouplement.

En effet, les éjecteurs 24 équipés des pièces 26 doivent être réglés de sorte que tous les dispositifs fonctionnent simultanément lors du désaccouplement. Il pourrait en effet se produire que l'un des dispositifs soit en traction alors que les autres sont libres, le socle 18 étant en butée, ce qui risque d'endommager sérieusement les accoupleurs. L'obtention d'un fonctionnement rigoureusement simultané des différents accoupleurs nécessiterait une mise à hauteur très précise des éjecteurs 24, ce qui est pratiquement impossible à réaliser. Aussi, en raison de tous ces inconvénients (difficulté d'alignement des entraxes des accoupleurs et de mise à hauteur correcte des éjecteurs), on a cessé d'utiliser les accoupleurs automatiques du commerce dans les machines à plusieurs éjecteurs pour utiliser à nouveau des systèmes complexes tels que des vérins.

La présente invention a pour but d'éliminer ces inconvénients en proposant un dispositif d'éjection et de rappel d'éjection d'une pièce dans une machine qui permet d'utiliser les accoupleurs automatiques du commerce même en cas de défaut d'alignement des différentes pièces de la machine.

Le dispositif objet de l'invention comporte, de manière connue :
- au moins un éjecteur fixe par rapport au bâti de la machine,
- un ensemble mobile monté sur le bâti de la machine et apte à se déplacer le long de ce bâti,
- un ensemble d'éjection monté sur ledit ensemble mobile et pouvant se déplacer par rapport à celui-ci,
- des moyens d'accouplement entre ledit éjecteur et l'ensemble d'éjection afin d'immobiliser ce dernier alors que l'ensemble mobile continue à se déplacer, lesdits moyens d'accouplement comprenant une pièce mâle montée sur l'éjecteur ou l'ensemble d'éjection et une pièce femelle montée sur l'ensemble d'éjection ou l'éjecteur.

Selon l'invention, l'une au moins des pièces mâle ou femelle est montée sur l'élément qui la supporte à l'aide de moyens de fixation autorisant un débattement relatif limité entre ladite pièce et ledit élément, ces moyens de fixation comprenant des moyens élastiques de rappel de ladite pièce et dudit élément vers une position de transmission d'effort, ces moyens élastiques étant situés entre ladite pièce et ledit élément et se comprimant avant le déverrouillage des moyens d'accouplement.

Ainsi, grâce à ce débattement, on obtient toujours le verrouillage de la pièce mâle sur la pièce femelle, même s'il y a un certain désalignement entre les axes des deux pièces.

Il va de soi que si la pièce mâle est montée sur l'éjecteur, la pièce femelle est montée sur l'ensemble d'éjection, mais on ne sortirait pas du cadre de l'invention en inversant la position des pièces, la pièce mâle étant montée sur l'ensemble mobile et la pièce femelle sur l'éjecteur. Quant à l'expression "vers une position de transmission d'effort", elle signifie que les moyens élastiques de rappel sont montés de manière à pousser la pièce montée avec un débattement relatif dans le sens dans lequel elle est poussée au moment de l'accouplement. Lors de l'accouplement, les deux pièces mâle et femelle exercent un effort l'une sur l'autre et celle qui est fixe, par exemple la pièce mâle, tend à pousser l'autre dans une certaine direction. Par exemple si la pièce femelle est montée avec un certain débattement sur l'ensemble d'éjection, au moment ce l'accouplement, elle est poussée contre l'ensemble d'éjection.

Selon un autre aspect de l'invention, la pièce qui est montée librement est montée sur l'ensemble d'éjection et comporte une partie cylindrique se trouvant dans un trou cylindrique de l'ensemble d'éjection, le diamètre du trou étant supérieur à celui de ladite partie cylindrique, ce qui autorise ainsi un jeu radial. D'autre part, ladite pièce est mobile entre deux butées prévues sur l'ensemble d'éjection, ce qui autorise un jeu axial.

Le fait d'avoir à la fois un jeu axial et un jeu radial non seulement permet le verrouillage même si les axes des pièces mâle et femelle ne sont pas alignés mais aussi permet que tous les accoupleurs fonctionnent simultanément lors du déverrouillage.

Dans un mode préféré de réalisation, les moyens élastiques de rappel appliquent ladite pièce sur l'une des deux butées.

Dans le mode préféré de réalisation, la pièce mâle est montée sur l'éjecteur et elle est fixe par rapport à celui-ci, tandis que la pièce femelle est montée sur l'ensemble d'éjection à l'aide de moyens de fixation autorisant un débattement relatif limité.

Enfin, la pièce mâle et la pièce femelle comportent des chanfreins afin de faciliter l'accouplement.

L'invention apparaîtra mieux à la lecture de la description qui va suivre, donnée à titre d'exemple purement illustratif et nullement limitatif, en référence aux dessins annexés, dans lesquels :

- les figures 1a à 1d, déjà décrites, sont des vues schématiques en coupe verticale illustrant le principe de fonctionnement d'un dispositif d'éjection dans une machine de moulage équipée d'accoupleurs automatiques selon l'art antérieur,
- la figure 2, déjà décrite, est une vue schématique en coupe verticale illustrant les moyens d'accouplement entre les éjecteurs et l'ensemble mobile dans la machine de la figure 1,

- la figure 3 est une vue semblable à la figure 2 illustrant l'accouplement dans le cas d'un dispositif conforme à l'invention,

- la figure 4 est une vue schématique en coupe, à échelle agrandie, illustrant les moyens d'accouplement utilisés dans l'invention,

- la figure 5 est une vue semblable à la figure 4, illustrant un mode particulier de verrouillage de la pièce mâle sur la pièce femelle,

- la figure 6 est une vue schématique en coupe suivant la ligne VI-VI de la figure 5,

- les figures 7a à 7d sont des vues schématiques illustrant différents montages possibles avec la pièce mâle sur l'éjecteur et la pièce femelle sur l'ensemble d'éjection, et

- les figures 8a à 8d sont des vues schématiques illustrant différents montages possibles avec la pièce femelle sur l'éjecteur et la pièce mâle sur l'ensemble d'éjection.

Si l'on se reporte à la figure 3, on voit les éjecteurs 24 sur lesquels sont montés les embouts mâles d'accoupleurs 26, tandis que les embouts femelles 28 sont montés sur l'ensemble mobile 16. Selon l'invention, la partie femelle 28 est fixée à l'extrémité inférieure d'un axe de liaison 30. Ce dernier est cylindrique et passe à l'intérieur d'un trou 34, également cylindrique, prévu dans le socle 18 de l'ensemble d'éjection 16. Le diamètre du trou 34 est supérieur à celui de l'axe de liaison 30, ce qui autorise un certain débattement radial. D'autre part, l'ensemble formé par l'axe de liaison 30 et la partie femelle 28 repose sur le socle 18 de l'ensemble mobile 16 par l'intermédiaire de moyens élastiques 32, ce qui autorise un certain débattement axial. On voit sur la partie gauche de la figure 3 qu'en cas de désalignement entre l'éjecteur 24 et la pièce femelle 28, cette dernière peut se déplacer latéralement et/ou pivoter autour d'un axe perpendiculaire au plan de la figure, ce qui permet le verrouillage.

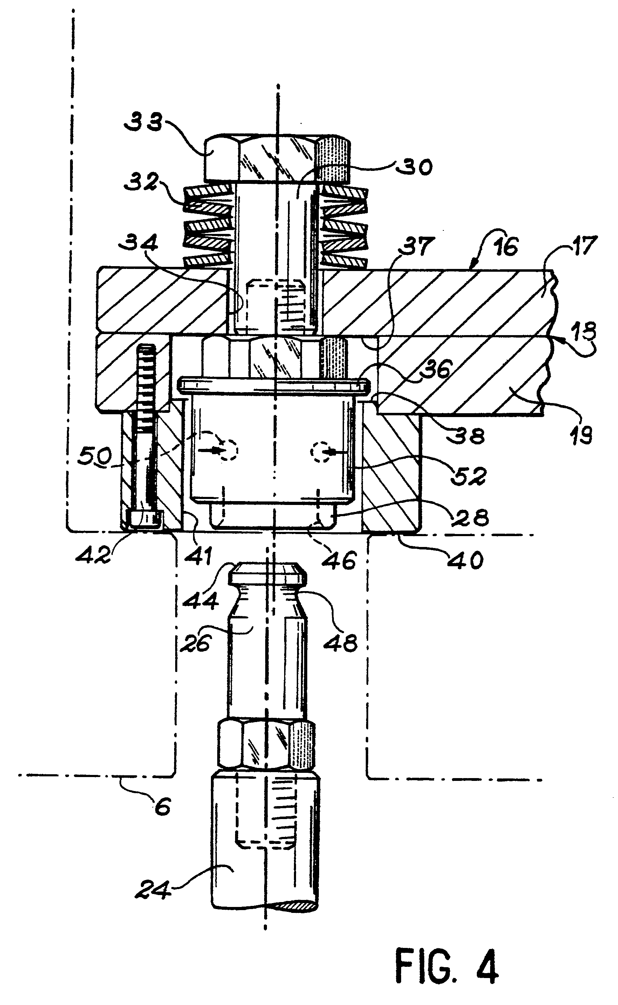

Les moyens d'accouplement apparaissent mieux sur la vue en coupe de la figure 4, où l'on retrouve la partie mâle 26 vissée dans la partie supérieure de l'éjecteur 24. La pièce femelle 28 est vissée dans l'axe de liaison 30, tandis que les moyens élastiques 32 sont constitués par un empilement de rondelles disposées entre la partie supérieure du socle 18 de l'ensemble d'éjection 16 et la tête 33 de l'axe de liaison 30. Les rondelles 32 poussent l'axe de liaison vers le haut, ce qui a pour effet d'appliquer la pièce femelle 28 contre une butée 37. Dans le cas particulier décrit ici, le socle 18 de l'ensemble d'éjection 16 est constitué d'une plaque 17 et d'une contre-plaque 19, la butée 37 étant constituée par la face inférieure de la plaque 17. Cependant, on ne sortirait pas du cadre de l'invention en utilisant un socle 18 constitué d'une seule plaque. Au moment de l'accouplement, la partie mâle 26 tend à pousser la partie femelle 28 en direction de la butée 37. La transmission d'effort au moment de l'accouplement tend donc à appliquer la pièce femelle contre la butée 37 et les moyens élastiques 32 sont bien des moyens de rappel de la pièce 28 dans la position de transmission d'effort.

On peut remarquer que les moyens élastiques 32 ne sont pas situés entre l'ensemble d'éjection 16 et la pièce femelle 28 proprement dite, mais entre l'ensemble 16 et la tête 33 de l'axe de liaison 30. Cependant, cet axe est rigidement lié à la pièce 28 et l'ensemble constitué par ces deux pièces peut être considéré comme étant la pièce femelle : on peut donc considérer que les moyens élastiques 32 sont situés entre l'ensemble d'éjection 16 et la pièce femelle.

Au moment du désaccouplement, la pièce mâle exerce sur la pièce femelle un effort vers le bas et celle-ci tend à s'éloigner de la butée 37. Cependant, on voit sur la figure 4 une douille 52, montée sur la pièce femelle 28 et équipée d'une collerette 36. Au cours du mouvement, la collerette 36 vient en contact avec une butée 38 prévue sur la pièce 40, ce qui a pour effet d'arrêter le mouvement vers le bas et de permettre le déverrouillage. Dans l'exemple représenté ici, la pièce 40 est fixée sur le socle 18 de l'ensemble d'éjection 16 à l'aide d'une ou plusieurs vis 42, mais on ne sortirait pas du cadre de l'invention en utilisant une disposition différente, la butée 38 étant ménagée directement sur le socle 18.

On retrouve également sur la figure 4 le passage 34, ménagé dans le socle 18 de l'ensemble d'éjection 16, dans lequel l'axe de liaison peut se déplacer radialement avec un débattement limité. La pièce 40 est également prévue avec un passage 41 dans lequel se trouvent la pièce femelle 28 et la douille 52. Cette dernière est cylindrique et le diamètre du passage 41 est supérieur à celui de la douille 52 afin de permettre le débattement radial. Le débattement axial est limité par les butées 37 et 38.

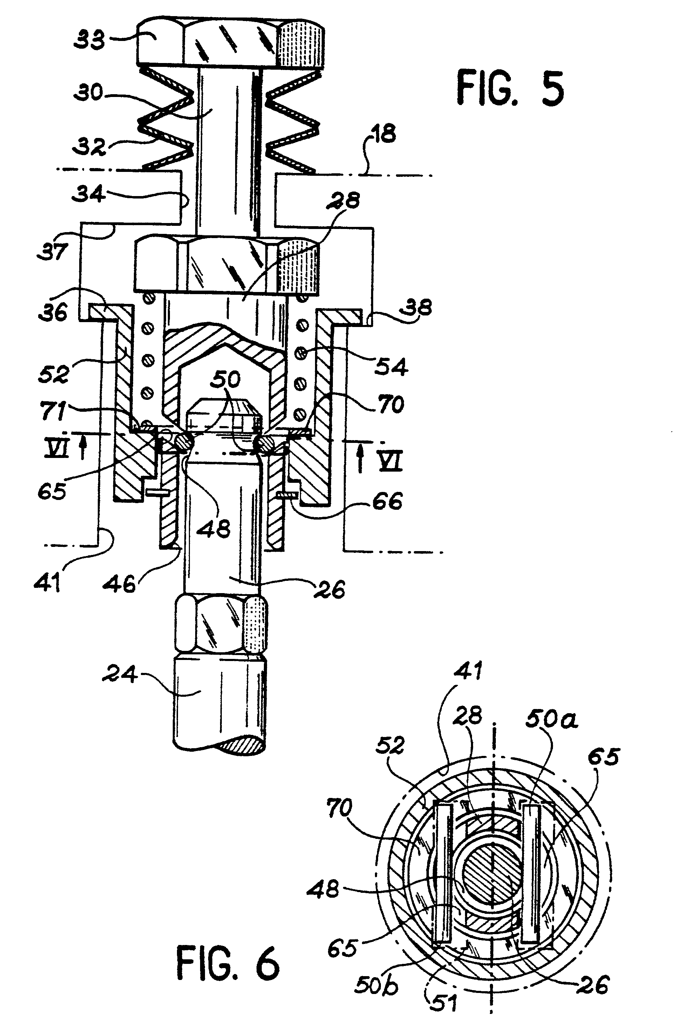

On voit encore que la partie mâle 26 comporte à sa partie supérieure un chanfrein 44 pouvant coopérer avec un chanfrein 46 prévu à la partie inférieure de la pièce femelle afin de faciliter la pénétration. La partie mâle 26 comporte également une gorge 48 pouvant coopérer avec des rouleaux 50 afin d'assurer le verrouillage, comme cela apparaît mieux sur les figures 5 et 6.

La douille ou bague extérieure 52 est montée autour de la pièce femelle 28 par l'intermédiaire d'un ressort 54 dont une extrémité est en appui sur la pièce 28 et l'autre sur une rondelle 70 (figure 5). Cette dernière peut venir en butée sur une face 71 de la bague 52 et maintient les rouleaux 50 dans les glissières 65 ménagées dans la pièce femelle 28 et inclinées par rapport à l'axe de celle-ci. Enfin, un circlips 66 monté à la partie inférieure de la pièce femelle 28 limite le mouvement relatif entre cette dernière et la bague 52.

La figure 5 représente les éléments du dispositif encore en position de verrouillage, mais juste avant que ne commence le déverrouillage lors de la remontée de l'ensemble mobile. Les rondelles 32 sont comprimées et la partie supérieure de la pièce 28 n'est plus en contact avec la butée 37. D'autre part, la douille 52 qui, auparavant, reposait sur le circlips 66 est sollicitée vers le haut par le mouvement du socle 18 de l'ensemble d'éjection : ce n'est plus sa partie basse qui repose sur le circlips 66, mais sa collerette 36 qui repose sur la butée 38. Quant aux rouleaux 50, ils sont poussés vers le bas par la rondelle 70 et le ressort 54 et bloqués dans la gorge 48 de la pièce 26.

Lors de la remontée de l'ensemble mobile et de l'ensemble d'éjection, la pièce mâle agit sur les rouleaux 50, ce qui a pour effet d'entraîner la pièce femelle 28 vers le bas jusqu'à ce qu'on atteigne la position illustrée à la figure 5. L'ensemble mobile et l'ensemble d'éjection continuant leur mouvement vers le haut, la rondelle 70, qui est en appui sur la face 71 de la bague 52, libère progressivement les rouleaux 50 qui remontent dans les glissières 65 au cours du mouvement relatif des pièces 28 et 26, assurant ainsi le déverrouillage de l'ensemble d'éjection lorsque les rouleaux 50 sont sortis de la gorge 48.

Une fois le déverrouillage effectué, les rondelles 32 appliquent à nouveau la partie supérieure de la pièce 28 contre la butée 37 et le ressort 54 pousse la pièce 52 vers le bas par l'intermédiaire de la rondelle 70. Cependant, comme la pièce 28 est en position haute, la bague 52 repose sur le circlips 66 et la collerette 36 n'est plus en contact avec la butée 38. Quant aux rouleaux 50, ils sont à nouveau poussés au fond des glissières 65 par la rondelle 70 sous l'effet du ressort 54.

Lors du verrouillage, ce sont les mêmes opérations qui se produisent en sens inverse. Lors de la descente de l'ensemble mobile, la pièce 26 repousse les rouleaux 50 dans les glissières 65, puis ceux-ci redescendent dans la gorge 48 sous l'effet du ressort 54 lorsque la pièce 28 est bloquée contre la butée 37.

Il est à noter que les glissières 65 sont de simples fentes de longueur limitée pratiquées dans la paroi de la pièce 28 afin que les rouleaux 50 viennent en butée au fond des glissières comme le rouleau 50a de la figure 6. Cette figure représente l'autre rouleau 50b en cours de verrouillage ou de déverrouillage, c'est-à-dire éloigné du fond de la glissière 65. D'autre part, il faut prévoir des logements 51 (représentés schématiquement en traits mixtes sur la figure 6) dans la pièce 52 pour que les rouleaux 50 puissent se déplacer radialement dans les glissières 65 tout en restant parallèles à eux-mêmes.

Bien entendu, il ne s'agit là que d'un exemple de réalisation du système de verrouillage et on ne sortirait pas du cadre de l'invention en utilisant un autre type de verrouilleur remplissant les mêmes fonctions.

De même, on ne sortirait pas non plus du cadre de l'invention en modifiant le montage des pièces mâle et femelle sur les éléments qui les supportent. Dans l'exemple de réalisation qui vient d'être décrit, la pièce mâle est montée sur l'éjecteur et elle est fixe tandis que la pièce femelle est montée sur l'ensemble d'éjection avec un jeu axial et un jeu radial, mais d'autres montages sont possibles sans sortir du cadre de l'invention.

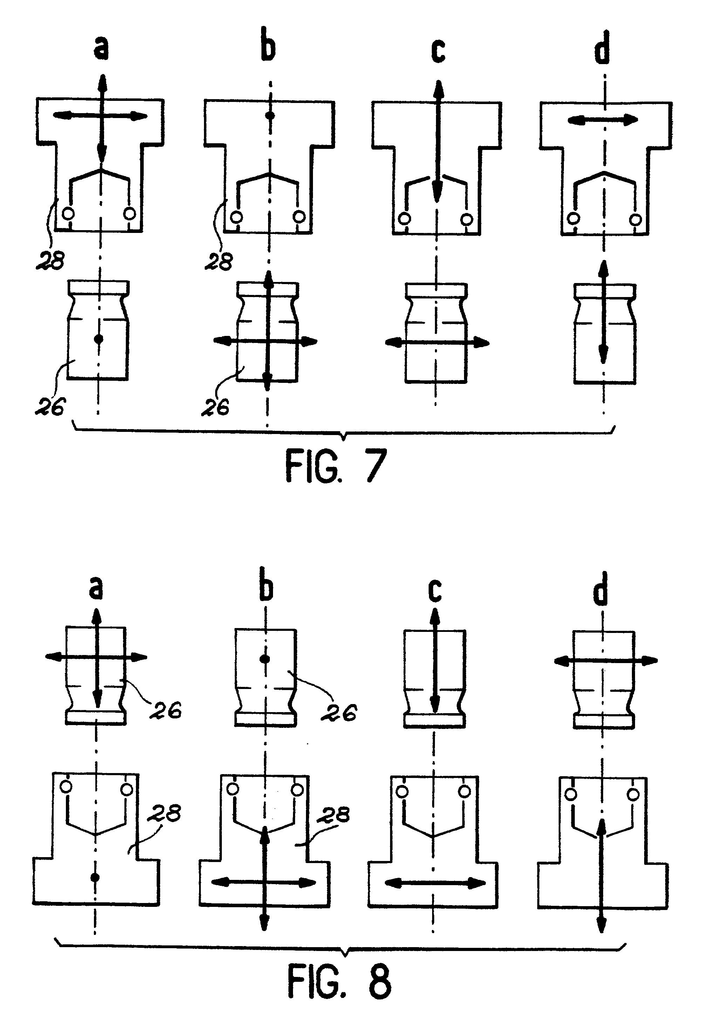

Les différentes possibilités de montage sont illustrées aux figures 7a à 7d et 8a à 8d. Dans le cas des figures 7a à 7d, la pièce mâle 26 est montée sur l'éjecteur et la pièce femelle 28 sur l'ensemble d'éjection. La figure 7a illustre le cas précédemment décrit où la pièce mâle 26 est fixe et la pièce femelle 28 mobile axialement et radialement. Sur la figure 7b, c'est la pièce femelle qui est fixe et la pièce mâle qui est mobile dans le sens radial et dans le sens axial. Dans le cas de la figure 7c, la pièce mâle est mobile dans le sens radial et la pièce femelle dans le sens axial et, dans le cas de la figure 7d, c'est la pièce mâle qui est mobile dans le sens axial et la pièce femelle dans le sens radial.

Les figures 8a à 8d montrent les différentes possibilités de montage avec la pièce femelle 28 sur l'éjecteur et la pièce mâle 26 sur l'ensemble d'éjection. Sur la figure 8a, la pièce femelle est fixe et la pièce mâle mobile axialement et radialement tandis que, dans le cas de la figure 8b, c'est la pièce mâle qui est fixe et la pièce femelle qui est mobile dans les deux directions. Sur la figure 8c, la pièce femelle est mobile radialement et la pièce mâle axialement. Enfin, sur la figure 8d, c'est la pièce femelle qui est mobile axialement et la pièce mâle radialement.

Ainsi, le dispositif objet de l'invention présente des avantages intéressants puisqu'il permet un verrouillage et un déverrouillage aisés de l'ensemble d'éjection sur les éjecteurs, même s'il y a un léger défaut d'alignement entre les éjecteurs et les embouts montés sur l'ensemble d'éjection. On élimine ainsi les risques de dégradation qui pourraient exister si un des éléments était en traction, les autres étant libres. Au moment du déverrouillage, les écarts de temps de désaccouplement dus principalement aux défauts de construction inhérents à tout dispositif mécanique sont compensés par le système élastique 32 qui s'écrase plus ou moins avant le déverrouillage. Une fois le déverrouillage effectué, la pièce femelle revient en butée contre l'ensemble d'éjection sous l'effet des moyens élastiques.

Enfin, si le dispositif objet de l'invention s'applique plus particulièrement aux machines à plusieurs éjecteurs en permettant d'éliminer les systèmes de rappel complexes de l'art antérieur, il peut également être utilisé sur des machines à un seul éjecteur. En effet, même si le montage rigide donne satisfaction dans ce type de machine, l'utilisation du dispositif objet de l'invention améliore l'emploi des accoupleurs du commerce car il n'est plus nécessaire d'avoir une très grande précision dans le montage.

**Revendications**

1. Dispositif d'éjection d'une pièce (14) dans une machine (2), comportant :
- au moins un éjecteur (24) fixe par rapport au bâti (4) de la machine,
- un ensemble mobile (6) monté sur le bâti de la machine et apte à se déplacer le long de ce bâti,
- un ensemble d'éjection (16) monté sur ledit ensemble mobile (6) et pouvant se déplacer par rapport à celui-ci,
- des moyens d'accouplement entre ledit éjecteur (24) et l'ensemble d'éjection (16) afin d'immobiliser ce dernier alors que l'ensemble mobile (6) continue à se déplacer, lesdits moyens d'accouplement comprenant une pièce mâle (26) montée sur l'éjecteur (24) ou l'ensemble d'éjection (16) et une pièce femelle (28) montée sur l'ensemble d'éjection (16) ou l'éjecteur (24),

caractérisé en ce que l'une au moins des pièces mâle ou femelle est montée sur l'élément qui la supporte à l'aide de moyens de fixation autorisant un débattement relatif limité entre ladite pièce et ledit élément, ces moyens de fixation comprenant des moyens élastiques de rappel de ladite pièce (28) et de l'élément (16) qui la supporte vers une position de transmission d'effort, ces moyens élastiques (32) étant situés entre ladite pièce (28) et ledit élément (16) et se comprimant avant le déverrouillage des moyens d'accouplement.

2. Dispositif d'éjection selon la revendication 1, caractérisé en ce que ladite pièce (28) comporte une partie cylindrique (30) se trouvant dans un trou cylindrique (34) de l'élément (16) qui la supporte, dont le diamètre est supérieur à celui de ladite partie cylindrique (30), autorisant ainsi un jeu radial, et en ce que ladite pièce (28) est mobile entre deux butées (37, 38) prévues sur l'élément (16) qui la supporte, autorisant ainsi un jeu axial.

3. Dispositif d'éjection selon l'une quelconque des revendications 1 et 2, caractérisé en ce que la pièce mâle (26) est montée sur l'éjecteur (24) et est fixe par rapport à celui-ci et en ce que la pièce femelle (28) est montée sur l'ensemble d'éjection (16) à l'aide de moyens de fixation autorisant un débattement relatif limité.

## Patentansprüche

1. Vorrichtung zum Auswerfen eines Teils (14) in einer Maschine (2), enthaltend:

– wenigstens einen Auswerfer (24), der gegenüber dem Gestell (4) der Maschine festliegt,

– eine bewegliche Einrichtung (6), die an dem Gestell der Maschine befestigt ist und in der Lage ist, sich längs dieses Gestells zu verstellen,

– eine Auswerfeinrichtung (16), die an der beweglichen Einrichtung (6) montiert ist und sich gegenüber dieser verstellen kann,

– Kupplungseinrichtungen zwischen dem Auswerfer (24) und der Auswerfeinrichtung (16), um letztere unbeweglich zu machen, während die bewegliche Einrichtung (6) sich weiterhin verstellen kann, welche Kupplungseinrichtungen ein Steckerteil (26), das an dem Auswerfer (24) oder der Auswerfeinrichtung (16) befestigt ist, und ein Buchsenteil (28), das an der Auswerfeinrichtung (16) oder dem Auswerfer (24) befestigt ist, enthalten,

– dadurch gekennzeichnet, daß von dem Steckerteil und von dem Buchsenteil wenigstens eines an dem Element befestigt ist, das es mittels Befestigungseinrichtungen hält, die eine begrenzte Relativverstellung zwischen dem genannten Teil und dem genannten Element erlauben, welche Befestigungseinrichtungen elastische Rückstelleinrichtungen für das genannte Teil (28) und das Element (16) aufweisen, das es gegen eine Kraftübertragungsposition abstützt, welche elastischen Einrichtungen (32) zwischen dem genannten Teil (28) und dem genannten Element (16) angeordnet sind und sich vor der Entriegelung der Kupplungseinrichtungen zusammendrücken.

2. Auswerfvorrichtung nach Anspruch 1, dadurch gekennzeichnet, daß das genannte Teil (28) einen zylindrischen Abschnitt (30) aufweist, der sich in einem zylindrischen Loch (34) des Elements (16) befindet, das es trägt, dessen Durchmesser größer als der des genannten zylindrischen Abschnitts (30) ist und so ein radiales Spiel ermöglicht, und daß das genannte Teil (28) zwischen zwei Anschlägen (37, 38) beweglich ist, die an dem Element (16) vorgesehen sind, das es trägt, und die so ein axiales Spiel ermöglichen.

3. Auswerfvorrichtung nach einem der Ansprüche 1 und 2, dadurch gekennzeichnet, daß das Steckerteil (26) an dem Auswerfer (24) befestigt ist und gegenüber diesem festgelegt ist, und daß das Buchsenteil (28) an der Auswerfeinrichtung (16) mittels Befestigungseinrichtungen befestigt ist, die eine begrenzte Relativverstellung ermöglichen.

## Claims

1. Device for ejecting a part (14) in a machine (2), comprising:

– at least one ejector (24) fixed relative to the frame (4) of the machine,

– a movable assembly (6) mounted on the frame of the machine and designed to move along this frame,

– an ejection assembly (16) mounted on the said movable assembly (6) and capable of moving relative to the latter,

– means for coupling between the said ejector (24) and the ejection assembly (16) in order to fix the latter in position while the movable assembly (6) continues to move, the said coupling means comprising a male part (26) mounted on the ejector (24) or the ejection assembly (16) and a female part (28) mounted on the ejection assembly (16) or the ejector (24), characterized in that at least one of the male or female parts is mounted on the element which supports it by means of fixing means allowing a limited relative clearance between the said part and the said element, these fixing means comprising elastic means for recalling the said part (28) and the element (16) which supports it towards a force transmission position, these elastic means (32) being located between the said part (28) and the said element (16) and being compressed before unlocking of the coupling means.

2. Ejection device according to Claim 1, characterized in that the said part (28) has a cylindrical part (30) located in a cylindrical hole (34) of the element (16) which supports it, the diameter of which is greater than that of the said cylindrical part (30), thus allowing a radial play, and in that the said part (28) is movable between two stops (37, 38) provided on the element (16) which supports it, thus allowing an axial play.

3. Ejection device according to either one of Claims 1 and 2, characterized in that the male part (26) is mounted on the ejector (24) and is fixed relative to the latter and in that the female part (28) is mounted on the ejection assembly (16) by means of fixing means allowing a limited relative clearance.

EP 0 233 113 B1

FIG. 1a

FIG. 1b

FIG. 1c

FIG. 1d

FIG. 2

FIG. 3

FIG. 4

FIG. 5

FIG. 6

a  b  c  d

28

28

26

26

FIG. 7

a  b  c  d

26

26

28

28

FIG. 8